(19) Europäisches Patentamt / European Patent Office / Office européen des brevets

(11) **EP 0 897 100 B1**

(12) **EUROPEAN PATENT SPECIFICATION**

(45) Date of publication and mention
of the grant of the patent:
**08.02.2012 Bulletin 2012/06**

(51) Int Cl.:
***G01B 21/00*** (2006.01)  ***G01B 7/012*** (2006.01)

(86) International application number:
**PCT/JP1998/000613**

(21) Application number: **98902231.4**

(22) Date of filing: **16.02.1998**

(87) International publication number:
**WO 1998/036241 (20.08.1998 Gazette 1998/33)**

(54) **NONDIRECTIONAL TOUCH SIGNAL PROBE**

RICHTUNGSUNABHÄNGIGER KONTAKTMESSFÜHLER

SONDE DE MESURE DE SIGNAUX TACTILE NON DIRECTIONNELLE

(84) Designated Contracting States:
**DE FR GB**

(30) Priority: **17.02.1997 JP 3214997**
**29.07.1997 JP 20311097**

(43) Date of publication of application:
**17.02.1999 Bulletin 1999/07**

(73) Proprietor: **Mitutoyo Corporation
Kanagawa 213-0012 (JP)**

(72) Inventors:
• **ISHIKAWA, Nobuhiro,
Mitutoyo Corporation
Ibaraki-ken 305-0854 (JP)**
• **NISHIMURA, Kunitoshi,
Mitutoyo Corporation
Ibaraki-ken 305-0854 (JP)**

(74) Representative: **Skone James, Robert Edmund
Gill Jennings & Every LLP
The Broadgate Tower
20 Primrose Street
London EC2A 2ES (GB)**

(56) References cited:
EP-A- 0 427 177   DE-A- 3 933 575
GB-A- 2 006 435   JP-A- 6 221 806
US-A- 4 177 568

• PATENT ABSTRACTS OF JAPAN vol. 006, no. 100 (P-121), 9 June 1982 (1982-06-09) -& JP 57 033301 A (MITSUTOYO MFG CO LTD), 23 February 1982 (1982-02-23)
• PATENT ABSTRACTS OF JAPAN vol. 018, no. 587 (P-1824), 10 November 1994 (1994-11-10) -& JP 06 221806 A (MITSUTOYO CORP), 12 August 1994 (1994-08-12)

**EP 0 897 100 B1**

**Description**

TECHNICAL FIELD

The present invention relates to a non-directional touch signal probe to be used to measure shape or the like of an object by a coordinate measuring machine or the like.

BACKGROUND ART

A coordinate measuring machine or the like is known as a measuring instrument to measure shape, size or the like of an object. In this case, in order to perform coordinate detection or position detection, the measuring instrument is provided with a touch signal probe wherein a touching part is provided at a top end portion of a stylus. The touching part is used to detect touching the object.

As such a touch signal probe, in a conventional example, a stylus is provided with a detecting element such as a piezoelectric element, and when a touching part at a top end portion of the stylus touches an object to be measured, impact in this case is detected and the touch detection is performed. This conventional example is advantageous in that the configuration is relatively simple, but disadvantageous in that the sensitivity is different depending on from which direction the touching part touches the object, that is, it has the direction dependent property.

Conventional examples of such touch signal probes are disclosed in Japanese Patent Publication No. 60-48681 (corresponding to USP 4,177,568) (conventional example 1), Japanese Patent Laid-Open No. 54-78164 (corresponding to GB 2006435B) (conventional example 2) and Japanese Patent Laid-Open No. 8-327308 (conventional example 3).

In the conventional example 1, a measuring head or a measuring probe comprises a movable part and a stationary part, and these parts are connected to each other through a seat mechanism.

The movable part is constituted by two members divided in two, and a detecting element (piezoelectric element) responding to tension and compression at high sensitivity is provided between these members.

In the conventional example 2, a piezoelectric element is assembled in a part of a stylus, or a stylus is divided in two and a piezoelectric element is grasped between the divided parts of the stylus, or a piezoelectric element is assembled (or installed) to a touching ball provided at a top end portion of a stylus further a piezoelectric element is grasped in a connection part between a touching ball and a stylus.

In the conventional example 3, a stylus is mounted at the center of a disk-shaped substrate, and a plurality of piezoelectric elements are arranged in radial form around the stylus. In order to detect that the stylus touches the object, sum of absolute values of signals outputted from respective piezoelectric elements is detected.

In the conventional examples 1 and 2, various cases are disclosed such that one piezoelectric element is installed or a plurality of piezoelectric elements are installed.

In general, when piezoelectric elements are little in the number, since structure of a stylus is simple and the assembling is easy, advantage exists in that the cost can be made low, but the detection accuracy is not sufficient and there is the direction dependent property.

On the contrary, when a plurality of piezoelectric elements (detecting elements) are assembled, although the direction dependent property becomes little by manner of combining these elements, disadvantage exists in that the structure is complicated.

Here, the direction dependent property means degree of difference in the response of a detecting element depending on a touching portion of a touching ball at a top end portion of a stylus when the touching ball touches the object. In the conventional example 1, although the detecting elements are separated into that for detecting the X-axis and that for detecting the Y-axis, the direction dependent property is not further considered. Consequently improvement of the direction dependent property is not sufficient. Also in the conventional example 2, relation between the direction dependent property and the arrangement of the piezoelectric elements is not considered.

Also in the conventional example 3, sum of absolute values of signals outputted from a plurality of piezoelectric elements is operated and a detection signal is fetched so that directional property in the detection sensitivity is not produced when the top end portion of the stylus touches the object, but when it touches the object from the direction orthogonal to the stylus axis, improvement of the direction dependent property of the detection sensitivity is not sufficient. Also the conventional example 3 does not contain any mention regarding the case of touching from the stylus axis direction.

Also when coordinate detection or position detection is performed using a touch signal probe, exchanging of a stylus is usually performed. In a conventional touch signal probe, however, the case of the stylus being definite is assumed but the case of the stylus being exchanged is not assumed.

Further examples of touch signal probes may be found in DE-A-3933575 and EP-A-0427177.

P-A-57-33301 discloses a touch probe comprising a stylus having a cylindrical portion to which four strain gauges are affixed on flattened surfaces in order that the contact direction can be determined.

JP-A-6-221806 discloses a touch probe comprising a cylindrical stylus having a rectangular slot cut therein for mounting of a piezoelectric element for applying vibration to the stylus and detecting any change in the vibration due to contact with a workpiece.

DISCLOSURE OF THE INVENTION

An object of the present invention is to provide a touch signal probe which is simple in structure and does not have the direction dependent property.

Another object of the present invention is to provide a touch signal probe which does not have the direction dependent property whatever stylus is installed.

Therefore the present invention intends to attain the foregoing object in that a touch detection signal is generated based on sum, difference or square of signals outputted from detecting elements (for example, piezoelectric element or strain gauge) mounted on a side surface of a piezoelectric element support part of a regular polygonal body.

More specifically a non-directional touch signal probe comprises:

a pole-shaped stylus with its top end portion having a touching part for touching an object to be measured;
detecting elements arranged to said stylus for detecting that said touching part touches the object; and
touch signal generation means adapted to process signals outputted from said detecting elements and generate a touch detection signal based on results of processing;
wherein said stylus has a detecting element support part for supporting and fixing said detecting elements;
characterised in that said detecting element support part comprises a center part which has a circular cross-section and which is formed to be constricted between two side parts with a regular polygon cross-section orthogonal to the stylus axis, said detecting elements being mounted on at least two surfaces among respective side surfaces of the regular polygonal side parts of the detecting element support part, both end parts of the detecting elements being supported and fixed to both regular polygonal side parts of the detecting element support part, and a gap is formed between the center part of the detecting elements and the center part of the detecting element support part.

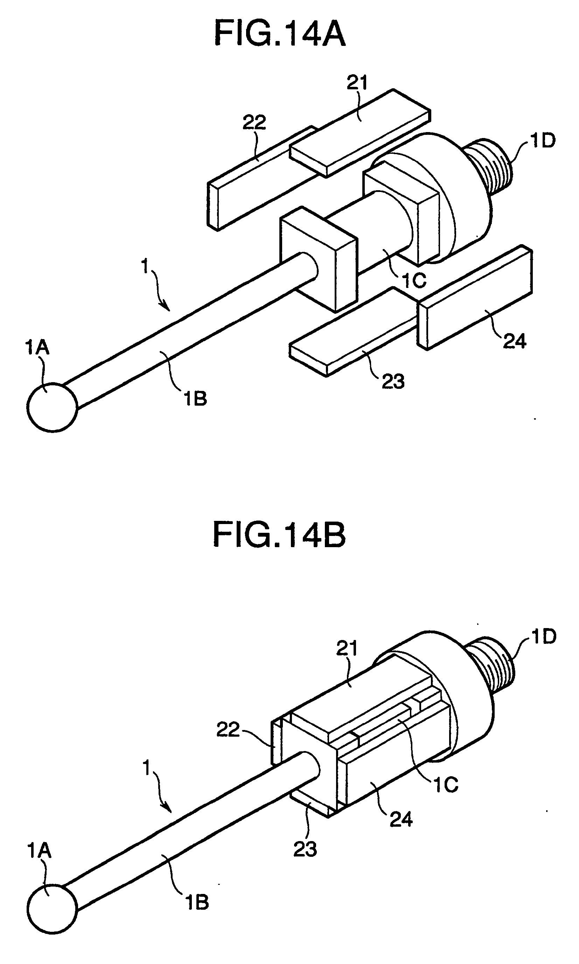

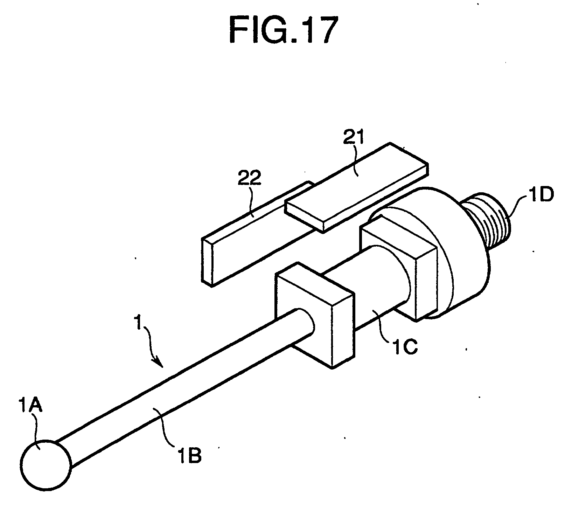

Preferred embodiments are subject of the dependent claims 2 to 10. A non-directional touch signal probe according to the invention is shown in Fig. 14A and 17 only.

For the measurement, when a touch signal probe of the present invention is moved and a touching part of a stylus touches an object, impact force at the touching state is detected by detecting elements. In this case, a detection signal is outputted from each detecting element, and at first, signals of sum and difference of signals outputted from each detecting element are produced respectively, for example. Sum of signals outputted from each detecting element is operated in order that bending strain component acting on the stylus axis is removed and longitudinal strain component acting in the stylus axis direction is extracted, and difference of signals outputted from each detecting element is operated in order that the bending strain component acting on the stylus axis is extracted from signals outputted from each detecting element and being different in the phase.

Subsequently, signals of square sum of these sum signal and difference signal are produced respectively, for example. Each signal is squared in order that the maximal value of signals outputted from each detecting element is made completely constant irrespective of angle between mounting orientation of the detecting element and touching orientation with the object. Further square sum of each signal is taken thereby a large detection signal can be obtained and the measurement precision can be improved.

A touch detection signal is generated based on the signal produced from the square sum, for example, and coordinates in the point with the touch detection signal generated therein are read as a measured value.

Accordingly in the present invention, signals outputted from each detecting element are processed thereby the direction dependent property is eliminated and the measurement can be performed with high precision.

Further since the detecting elements are mounted on side surfaces of a regular polygonal body, structure of a touch signal probe can be made simple.

Here in the present invention, cross-section of the side parts of the detecting element support part may be made square and the detecting elements of four in the total number may be mounted on each side surface of the detecting element support part. In this case, a touch detection signal may be generated from two difference signals outputted from two detecting elements positioned in relation of the front and rear sides with each other with respect to the detecting element support part among these four detecting elements and from sum signals outputted from all four detecting elements or sum signals outputted from the two detecting elements positioned in relation of the front and rear sides with each other.

In this constitution, since touch detection signals are generated based on signals outputted from four detecting elements arranged in spacing of 90 degrees from each other with respect to the stylus axis, the measurement can be performed with high precision.

Further the first detection signal may be produced from square sum signal which is square sum of two difference signals outputted from two sets of detecting elements positioned in relation of the front and rear sides as above described, and the second detection signal may be produced from sum signals outputted from the four detecting elements or from sum signals outputted from the two detecting elements positioned in relation of the front and rear sides, and the second detection signal is delayed by a prescribed time and then the touch detection signal is generated from the disjunction of the first detection signal and the delayed second detection signal.

In this constitution, when the touch detection signal is produced from the first detection signal and the second detection signal by the disjunction, the second detection signal forming the maximal value early in the time is delayed by a prescribed time thereby the same touch detection signal is generated irrespective of the touch position of the touching ball.

Also the first detection signal may be produced when square sum signal of the two difference signals outputted from two sets of detecting elements positioned in relation of the front and rear sides as above described exceeds the reference value, and the second detection signal may be produced when sum signal outputted from the four piezoelectric elements or sum signal outputted from the two detecting elements positioned in relation of the front and rear sides exceeds the reference value.

In this constitution, in similar manner to the preceding description, the same output is generated irrespective of the touch position of the touching part.

Also sum signals outputted from the respective detecting elements or sum signals from the two detecting elements positioned in relation of the front and rear sides are adjusted in amount and delayed by a prescribed amount thereby one signal is obtained, and two difference signals are outputted from the detecting elements in relation of the front and rear sides, and one signal and the two signals, thus the total three signals are squared and then summed respectively and a touch detection signal may be generated using the processed signal of the three signals.

BRIEF DESCRIPTION OF THE DRAWINGS

Fig. 1 shows a first example of a touch signal probe wherein Fig. 1A is a perspective view showing state before piezoelectric elements are mounted and Fig. 1B is a perspective view showing state after a piezoelectric elements are mounted;

Fig. 2A is a front view showing state that a touching part of a touch signal probe touches an object to be measured from direction orthogonal to the stylus axis, and Fig. 2B is a graph showing variation with time of output of one piezoelectric element in the case of Fig. 2A;

Fig. 3 is a perspective view of a touch signal probe explaining angle between mounting direction of a piezoelectric element and direction of a stylus touching an object to be measured;

Fig. 4 is a graph showing relation of the angle $\Theta$ and output maximal value $V_o$ of the piezoelectric element;

Fig. 5 is a block diagram showing constitution of producing a touch signal from signal outputted from a piezoelectric element;

Fig. 6 is a circuit diagram showing constitution of producing a touch signal from signal outputted from a piezoelectric elements;

Fig. 7 is a perspective view of a stylus explaining angle $\beta$ between direction orthogonal to the stylus axis and direction of a touching part touching an object to be measured;

Fig. 8 shows a circuit diagram showing constitution of producing a touch signal from signals outputted from a piezoelectric elements; elements;

Fig. 9 is a circuit diagram of a second example showing constitution producing a contact signal from a signal outputted from piezoelectric elements;

Fig. 10 is a circuit diagram showing constitution of a delay circuit and a time difference measuring circuit;

Fig. 11 is a graph showing relation of first detection signal $S_H$, second detection signal $S_v$ and output signal $S_1$ of a flip-flop circuit;

Fig. 12 is a diagram showing a modification of the second example corresponding to Fig. 10;

Fig. 13 is a circuit diagram showing a load signal generating circuit constituting the modification;

Fig. 14A shows a whole configuration of the prevent invention. Fig. 14B is an example of a perspective view of a touch signal probe showing state after piezoelectric elements are mounted;

Fig. 15 shows a whole configuration of another example of a touch signal probe, wherein Fig. 15A is a perspective view showing state before the piezoelectric elements are mounted and Fig. 15B is a perspective view showing state after the piezoelectric elements are mounted;

Fig. 16 is a perspective view showing another example of a touch signal probe; and

Fig. 17 is an exploded perspective view showing a whole configuration of a modification of the present invention (example of shape of the center part of a piezoelectric element support part being different).

BEST MODE FOR CONDUCTING THE INVENTION

The embodiments of the present invention will hereunder be described in detail with reference to the accompanying drawings.

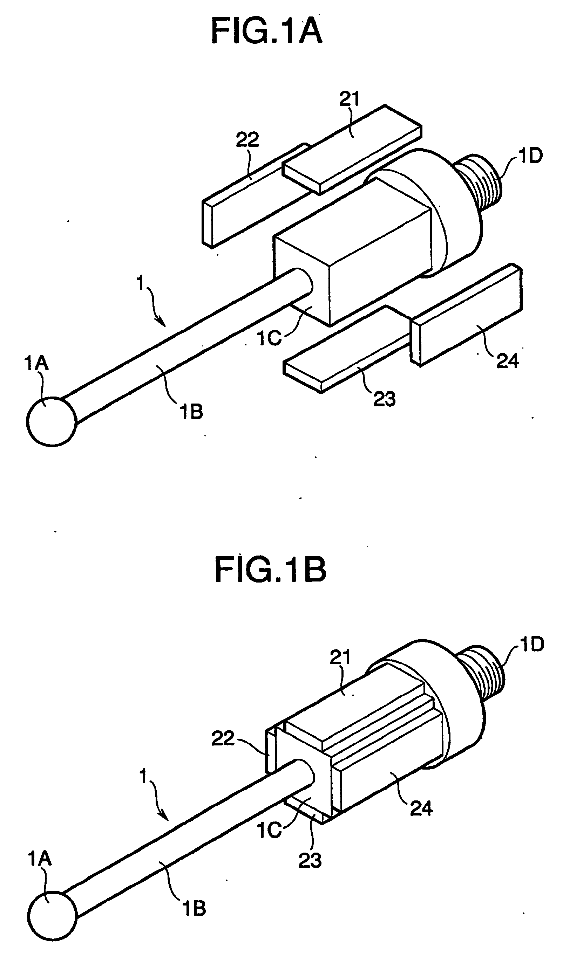

Fig. 1 shows the whole configuration of a touch signal probe according to a first example , and Fig. 1A shows state before a piezoelectric elements are mounted and Fig. 1B shows state after the piezoelectric elements are mounted.

In Fig. 1A, a touch signal probe in this example comprises a pole-shaped stylus 1 having a touching ball 1A touching an object to be measured at a top end portion and four piezoelectric elements 21 - 24 mounted on the stylus 1. The stylus 1 comprises the touching ball 1A, a stylus body 1B with circular cross-section on one end portion of which the touching ball 1A is mounted, a piezoelectric element support part 1C formed integrally with other end portion of the stylus body 1B, and a screw part 1D provided on end portion of the piezoelectric element support part 1C and to be installed to a probe body (not shown). These members are arranged on the stylus axis.

The piezoelectric element support part 1C is rectangular parallelepiped with cross-section being made square and orthogonal to the stylus axis, and the piezoelectric elements 21 ~ 24 are fixed to each side surface of the rectangular parallelepiped by an adhesive or the like on the whole surface.

Among these, the piezoelectric elements 21, 23 are in relation of the front and rear sides to each other with respect to the piezoelectric element support part 1C, and the piezoelectric elements 22, 24 are in relation of the front and rear sides to each other in the position adjacent to the piezoelectric elements 21, 23.

As shown in Fig. 1B, the piezoelectric elements 21 - 24 are in plane rectangular form with the longitudinal direction in parallel to the stylus axis.

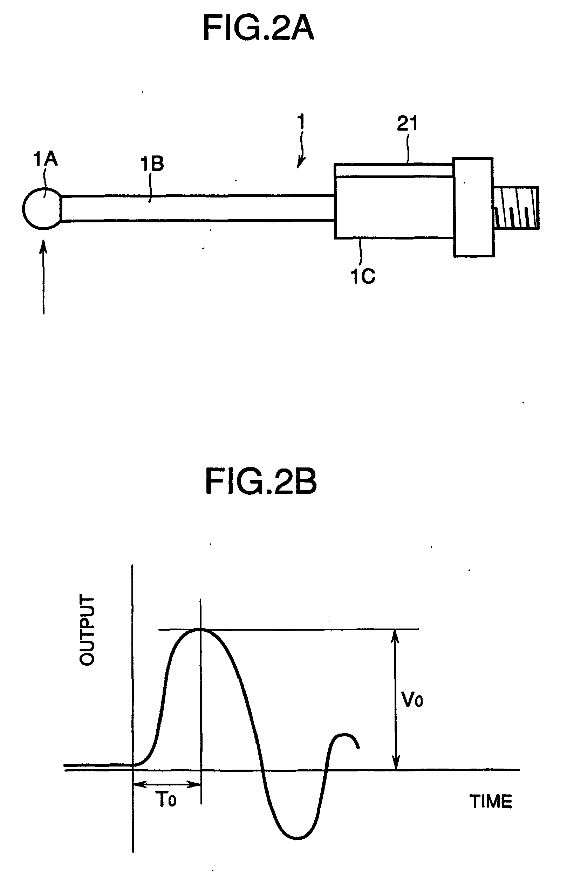

Fig. 2A is a front view showing the case that the touching ball 1A of the touch signal probe touches an object to be measured from the direction orthogonal to the stylus axis, and Fig. 2B is a graph showing variation with the time of output of one piezoelectric element 21 in the case of Fig. 2A.

In Fig. 2B, after touching the object to be measured, at the timing to determined by the natural frequency of the stylus 1 or the like, the output of the piezoelectric element 21 becomes the maximal value $V_o$.

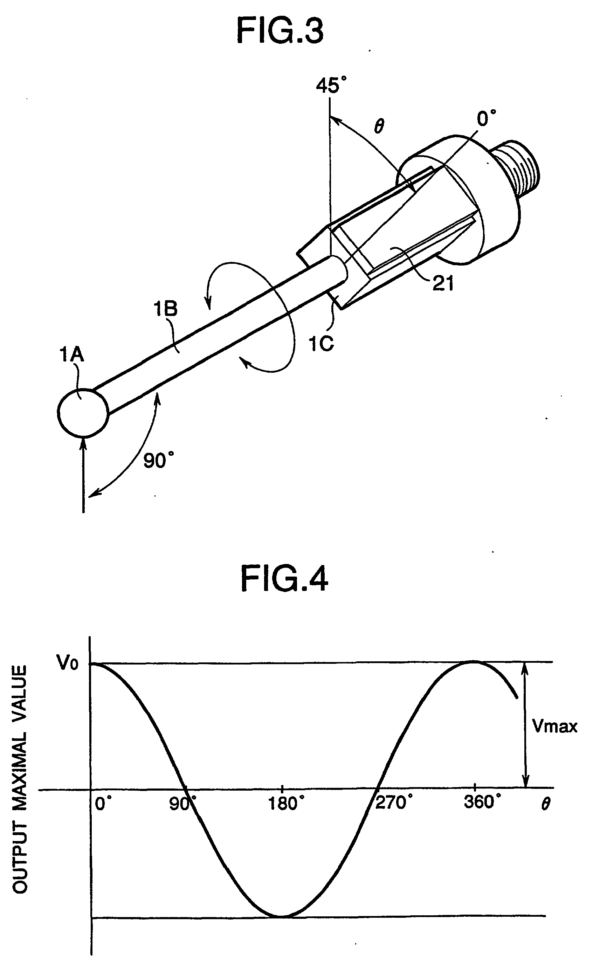

Amount of the maximal value Vo is different depending on angle between the mounting direction of the piezoelectric element 21 and the direction of the stylus 1 touching the object to be measured, that is, angle of the piezoelectric element 21 around the axis of the stylus 1 (refer to Fig. 3), and varies in sinusoidal form in the period of 360 degrees as shown in Fig. 4. It is seen that the output maximal value $V_o$ becomes the maximum $V_{max}$ when the stylus 1 touches the object to be measured at the angle of the piezoelectric element 21 liable to bending deformation ($\Theta= 0$).

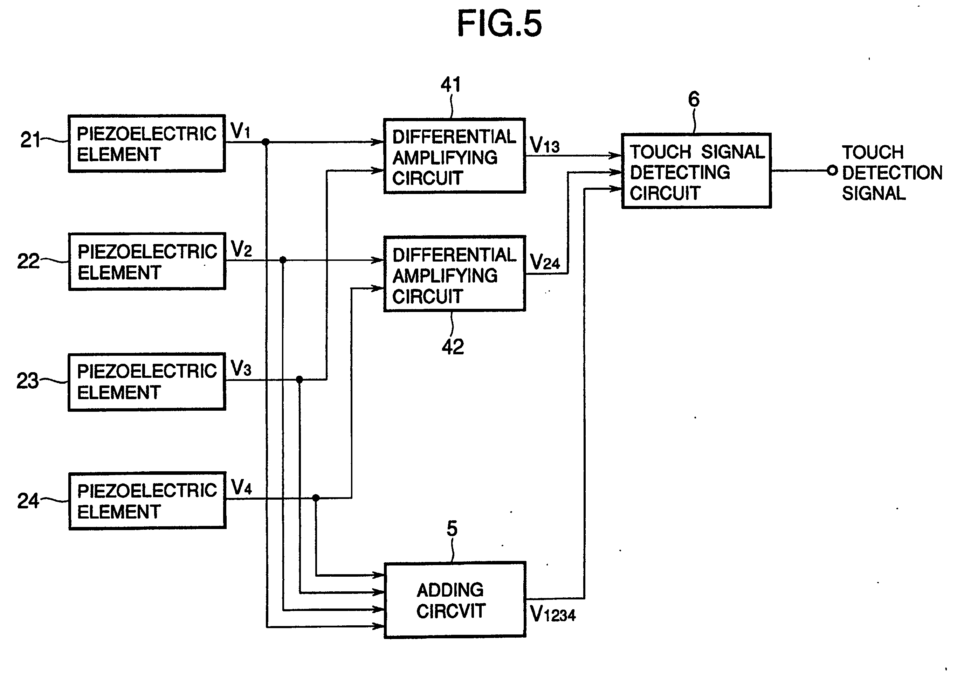

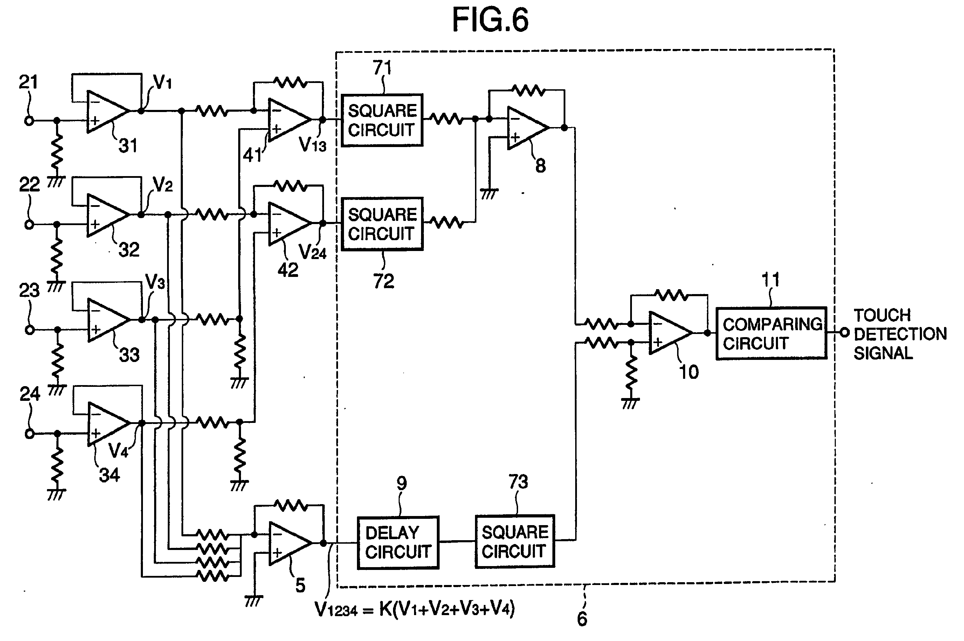

Fig. 5 is a block diagram showing constitution of producing a touch detection signal by outputs from four piezoelectric elements 21 - 24, and Fig. 6 is a circuit diagram thereof.

In Figs. 5 and 6, signals outputted from each of the piezoelectric elements 21 ~ 24 are amplified in amplifying circuits 31 - 34 and made $V_1 ~ V_4$, and then difference $V_{13}$ of the signals $V_1$, $V_3$ from the piezoelectric elements 21, 23 in relation of the front and rear sides to each other is operated by a differential amplifying circuit 41, and difference $V_{24}$ of the signals $V_2$, $V_4$ outputted from the piezoelectric elements 22, 24 in relation of the front and rear sides to each other is operated by a differential amplifying circuit 42. A first touch detection signal is produced in these differential amplifying circuits 41, 42.

Further, sum $V_{1234}$ of the signals $V_1 ~ V_4$ outputted from the piezoelectric elements 21 - 24 and amplified in the amplifying circuits 31 - 34 is operated by an adding circuit 5, and a second touch detection signal is produced in the adding circuit 5.

Here, the difference $V_{13}$ ($V_{24}$) of the output signals of the piezoelectric elements 21, 23 (22, 24) is operated, since the output signals from the piezoelectric elements 21, 23 (22, 24) being different in the mounting angle by 180 degrees with respect to the stylus axis are different in the phase by 180 degrees, it is intended that the difference is operated thereby the bending strain component acting on the stylus axis is extracted without attenuation.

Also the sum $V_{1234}$ of the four piezoelectric elements 21 - 24 is operated, in order that the bending strain component acting on the stylus axis is removed and the longitudinal strain component acting in the stylus axis direction is extracted. In this example, however, when the longitudinal strain component is extracted, the operation is not limited to obtain the sum of the output signals of all four piezoelectric elements 21 - 24, but the sum of the output signals from the two piezoelectric elements 21, 23 or the two piezoelectric elements 22, 24 being in relation of the front and rear sides to each other may be operated.

A touch detection signal is produced by the touch signal detecting circuit 6 from the first touch signal produced in the differential amplifying circuits 41, 42 and the second touch signal produced in the adding circuit 5.

In the touch signal detecting circuit 6, the differences ($V_{13}$, $V_{24}$) of the output signals being the first touch signal are squared in the square circuits 71, 72 respectively and then added in an adding circuit 8 and become one signal. Here the signals are squared and added in order that the maximum of outputs from the piezoelectric elements 21, 23 (22, 24) being different in the mounting angle by 90 degrees is made constant irrespective of the angle $\Theta$.

That is, if the maximal value of the difference output of the piezoelectric elements 21, 23 is expressed by

$$V_{13} = V_{max} \times COS(\Theta_0)$$

and the maximal value of the difference output of the piezoelectric elements 22, 24 is expressed by

$$V_{24} = V_{max} \times COS(\Theta_0 + 90)$$

since

$$(V_{13})^2 + (V_{24})^2 = (V_{max})^2$$

the maximal value of the output in the timing To becomes $(V_{max})^2$ irrespective of the angle $\Theta_0$.

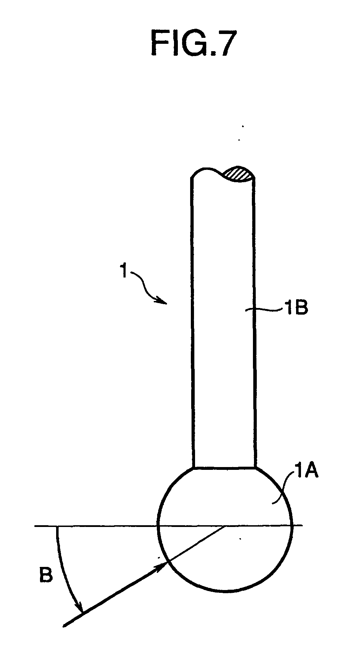

The above description has been performed in the case that the object to be measured touches the touching ball 1A from the direction orthogonal to the stylus axis of the stylus 1. In the case of touching at angle $\beta$ to the stylus axis (refer to Fig. 7), the maximal value of the output becomes $\{V_{max} \times COS \beta\}^2$. In addition, the angle $\beta$ in Fig. 7 is angle between the direction orthogonal to the stylus axis and the direction of the touching ball 1A touching the object to be measured.

Since the first touch signal $V_{13}$ ($V_{24}$) is the difference signal of the piezoelectric elements 21, 23 (22, 24) applied to the front and rear sides with respect to the stylus axis, Vmax $\times$ COS $\beta$ may be said a signal representing the bending strain component of the piezoelectric element support part 1C.

In Fig. 6, if K is assumed to be an amplification factor (constant), the sum signal $V_{1234}$ operated in the adding circuit 5 is determined by following formula.

$$V_{1234} = K (V_1 + V_2 + V_3 + V_4)$$

$V_{1234}$ is a signal representing the longitudinal strain component removing the bending strain component. When $\beta$ is 90 degrees, that is, when the touching ball 1A touches the object to be measured from the direction of the stylus axis, $V_{1234}$ becomes the maximum $V_M$. In the case of touching at the angle $\beta$ to the stylus axis, the maximal value of the output $V_{1234}$ becomes

$$V_{1234} = V_M \times SIN \beta$$

However, in general, the time of forming the maximal value of $\{V_{max} \times COS \times\}^2$ and the time of forming the maximal value of $V_{1234}$ are different. That is, since the longitudinal rigidity is higher than the bending rigidity generally,

$V_{1234}$ is early in the time.

Consequently gain of the adding circuit 5 and the differential amplifying circuits 41, 42 is adjusted so that $V_M$ = $V_{max}$, and the $V_{1234}$ signal is provided with suitable time delay by a delay circuit 9, and further subsequently the $V_{1234}$ signal is squared by a square circuit 73.

If the $(V_{1234})^2$ signal squared in the square circuit 73 and the $\{V_{max} \times COS\ \beta\}^2$ signal are added by an adding circuit 10, it follows that

$$(V_{1234})^2 + \{V_{max} \times COS\ \beta\}^2 = V_{max}^2$$

This becomes a constant current irrespective of the touch angle $\beta$.

That is, since the signal corresponding to the longitudinal strain forming the maximal value early in the time is delayed by the prescribed time, the maximal value is formed in the same timing as that of the signal corresponding to the bending strain and the same output can be generated irrespective of which position of the touching ball 1A touches the object.

And then the output is compared with the prescribed reference value in a comparing circuit 11, and if the output exceeds the reference value, a touch detection signal is generated.

In addition, this example is not limited to the manner that the $V_{1234}$) signal is provided with suitable time delay and then is squared, but the manner may be changed according to this example such that the $(V_{1234})$ signal is squared and then delayed.

Further, after the $(V_{1234})$ signal is provided with suitable time delay, $(V_{13})^2 + (V_{24})^2 + (V_{1234})^2$ may be operated. Also in this case, the same result as that described above can be obtained.

Accordingly, in this example, since a touch signal probe is constituted in that a pole-shaped stylus 1 having a touching ball 1A at a top end portion is provided with piezoelectric elements 21 - 24 arranged thereon for detecting that the touching ball 1A touches an object to be measured, the stylus 1 has a piezoelectric element support part 1C for supporting and fixing the piezoelectric elements 21 - 24, the piezoelectric element support part 1C is a regular polygonal body with cross-section orthogonal to the axis of the stylus 1 being made regular polygon, the piezoelectric elements 21~ 24 are mounted on at least two surfaces respectively among side surfaces of the regular polygonal body, signals of sum, difference and square sum of signals outputted from these piezoelectric elements 21 ~ 24 are produced, and a touch detection signal is generated based on the produced signals, signals outputted from each of the piezoelectric elements 21 ~ 24 are processed thereby the measurement of high precision can be performed without the direction dependent property.

That is, sum of signals outputted from the piezoelectric elements 21 - 24 is operated thereby the bending strain component acting on the stylus axis is removed and the strain component acting in the stylus axis direction is extracted, and difference of signals outputted from the piezoelectric elements 21 - 24 is operated thereby the bending strain component acting on the stylus axis is extracted based on the signals outputted from each of the piezoelectric elements 21 ~ 24 and being different in the phase, and further since signals of square sum of these sum signals and difference signals are produced respectively thereby the maximal value of the signals outputted from each of the piezoelectric elements 21 ~ 24 and being different in the mounting angle with respect to the stylus axis is made constant irrespective of the angle $\Theta$ between the mounting direction of the detecting piezoelectric element and the touch direction with the object to be measured, the measurement can be performed at high precision irrespective of the angle of the touching ball 1A touching the object to be measured.

Moreover, since the piezoelectric elements 21 ~ 24 are mounted on the side surfaces of the polygonal body, structure of the touch signal probe can be made simple.

Also in this example, since the cross-section of the piezoelectric element support part 1C is made square and all four piezoelectric elements 21 ~ 24 are mounted to each side surface respectively thereby a touch detection signal is generated from the two difference signals $V_{13}$, $V_{24}$ outputted from two sets of piezoelectric elements 21, 23 (22, 24) positioned in relation of the front and rear sides to each other with respect to the piezoelectric element support part 1C among the piezoelectric elements 21 - 24, the sum signal $V_{1234}$ outputted from all four piezoelectric elements 21 ~ 24 or the sum signal outputted from the two piezoelectric elements positioned in relation of the front and rear sides, a touch detection signal is generated based on the signals outputted from the four piezoelectric elements 21 - 24 arranged in spacing of 90 degrees from each other with respect to the stylus axis thereby the measurement can be performed with high precision.

Further, since the first touch signal is produced from the two difference signals $V_{13}$, $V_{24}$ outputted from two sets of piezoelectric elements 21, 23 (22, 24) positioned in relation of the front and rear sides, and the second touch signal is produced from the sum signal $V_{1234}$ outputted from the four piezoelectric elements 21 - 24 or the sum signal outputted from the two piezoelectric elements 21, 23 (22, 24) positioned in relation of the front and rear sides, and the second touch signal is delayed by a prescribed time and then a touch detection signal is generated by sum of the first touch signal and the second touch signal, when the touch detection signal is produced from the first touch signal and the second touch signal by the disjunction, the second touch signal corresponding to the longitudinal strain forming the maximal value early in the time is delayed by a prescribed time thereby the same output is generated irrespective of which position of the touching ball touches and therefore the measurement with high precision can be intended also from this point.

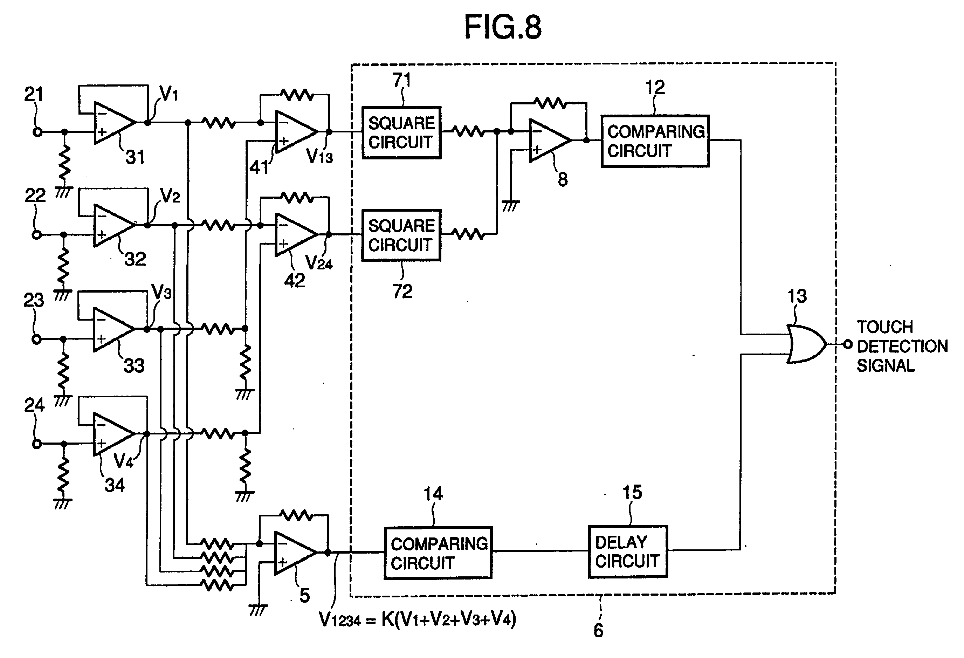

As shown in Fig. 8, a touch signal probe may be constituted in that signal $\{V_{max} \times COS\ \beta\}^2$ outputted from an adding circuit 8 is compared with the reference value in a comparing circuit 12, and if the signal exceeds the reference value, a touch detection signal is generated through an OR circuit 13, and on the other hand, sum signal $V_{1234}$ operated in an adding circuit 5 is compared with the reference value in a comparing circuit 14, and if the signal exceeds the reference value, the signal is delayed by a prescribed value in a delay circuit 15 and a touch detection signal is generated through the OR circuit 13.

Further in Fig. 6 and Fig. 8, although the touch signal generating circuit is constituted by an analog circuit, it may be constituted by a digital circuit. Also when precision is not required, the delay circuit 9 in Fig. 6 or the delay circuit 15 in Fig. 8 may be omitted.

Next, a second example will be described in detail. Since a whole configuration of a non-directional touch signal probe or output waveform of a piezoelectric element of this example is similar to that of the first example, the detailed description shall be omitted.

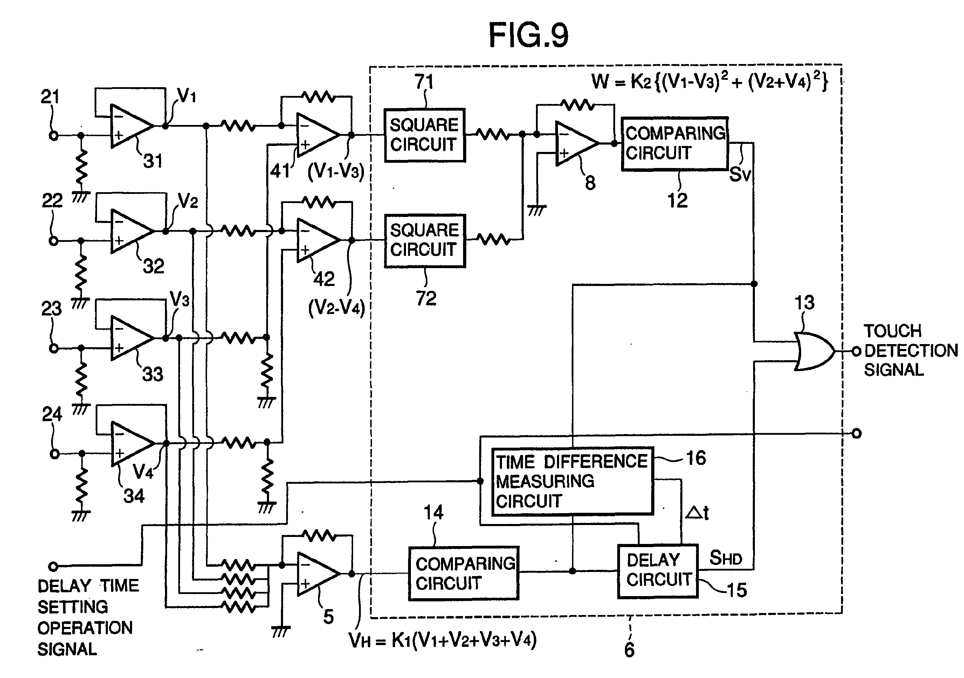

Fig. 9 is a circuit diagram of the second example where touch detection signals are generated by outputs from four piezoelectric elements 21 - 24.

In Fig. 9, signals outputted from each of the piezoelectric elements 21 ~ 24 are amplified in amplifying circuits 31 - 34 and made $V_1 \sim V_4$, and then difference $(V_1 - V_3)$ of the signals $V_1$, $V_3$ from the piezoelectric elements 21, 23 in relation of the front and rear sides to each other is operated by a differential amplifying circuit 41, and difference $(V_2 - V_4)$ of the signals $V_2$, $V_4$ outputted from the piezoelectric elements 22, 24 in relation of the front and rear sides to each other is operated by a differential amplifying circuit 42.

Here the differences $(V_1 - V_3)$, $(V_2 - V_4)$ of the output signals of the piezoelectric elements 21, 23 (22, 24) are operated in order that the lateral strain component is extracted.

Also sum of the signals $V_1 \sim V_4$ outputted from the piezoelectric elements 21 - 24 and amplified in the amplifying circuits 31 - 34 is operated by an adding circuit 5. The sum of the four piezoelectric elements 21 - 24 is operated in order that the lateral strain component acting on the stylus axis is removed and the longitudinal strain component acting in the stylus axis direction is extracted. In this example, however, when the longitudinal strain component is extracted, the operation is not limited to obtain the sum of the output signals of all four piezoelectric elements 21 - 24, but the sum of the output signals from the two piezoelectric elements 21, 23 or the two piezoelectric elements 22, 24 being in relation of the front and rear sides to each other may be operated.

A touch detection signal is produced by a touch signal detecting circuit 6 from the first touch signal produced in the differential amplifying circuits 41, 42 and the second touch signal produced in the adding circuit 5.

When $K_1$ is assumed to be an amplification factor, the sum signal $V_H$ operated by the adding circuit 5 is determined in following formula.

$$V_H = K_1 (V_1 + V_2 + V_3 + V_4)$$

The signals produced in the differential amplifying circuits 41, 42 are squared in square circuits 71, 72 respectively and then added in an adding circuit 8 and become signal $V_V$. The signal $V_V$ is a signal corresponding to the lateral strain component along the orthogonal direction to the stylus axis. Here the signals are squared and added in order that the output signals from the piezoelectric elements 21, 23 (22, 24) being different in the mounting angle by 90 degrees are made constant irrespective of the angle $\Theta$.

When $K_2$ is assumed to be an amplification factor, the signal $V_V$ operated in the adding circuit 8 is determined in following formula.

$$V_V = K_2 \{(V_1 - V_3)^2 + (V_2 - V_4)^2\}$$

In general, the timing of forming the maximal value of the signal $V_V$ and the timing of forming the maximal value of the signal $V_H$ are different. That is, since the longitudinal rigidity is higher than the bending rigidity, the signal $V_H$ is early in the time. Consequently, the signal $V_H$ corresponding to the longitudinal strain component forming the maximal value early in the time is delayed by the prescribed time thereby the maximal value is formed in the same timing as that of the signal corresponding to the lateral strain component so that the same output can be generated whatever position of the touching ball 1A touches the object.

More specifically, the signal $V_H$ operated by the adding circuit 5 is compared with the reference value (H level) in the comparing circuit 14, and when the signal exceeds the reference value (H level), the outputted first detection signal $S_H$ is delayed by the prescribed time in the delay circuit 15 and then generated through the OR circuit 13.

Also the signal $V_V$ operated by the adding circuit 8 is compared with the reference value (H level) in the comparing circuit 12, and when the signal exceeds the reference value (H level), the outputted second detection signal $S_V$ is generated through the OR circuit 13.

In this example, angle $\beta$ within the plane including the stylus axis (refer to Fig. 7) is made prescribed angle, for example, 45 degrees, and the stylus 1 is made to touch the object to be measured. Then the time difference $\Delta t$ between the time of generating the first detection signal $S_H$ and the time of generating the second detection signal $S_V$ is measured by a time difference measuring circuit 16. Here, the touch angle $\beta$ of the stylus 1 to the object is not limited to 45 degrees. It may be angle producing two components, the longitudinal vibration component in the stylus axis direction and the lateral vibration component in the orthogonal direction to the axis direction. In the theory, it may be angle other than zero degree or 90 degrees. In practice, however, since the time of generating respective vibration components must be measured, amplitude of respective vibration components must be of amount of some degree. Therefore the touch angle is preferably 45 degrees.

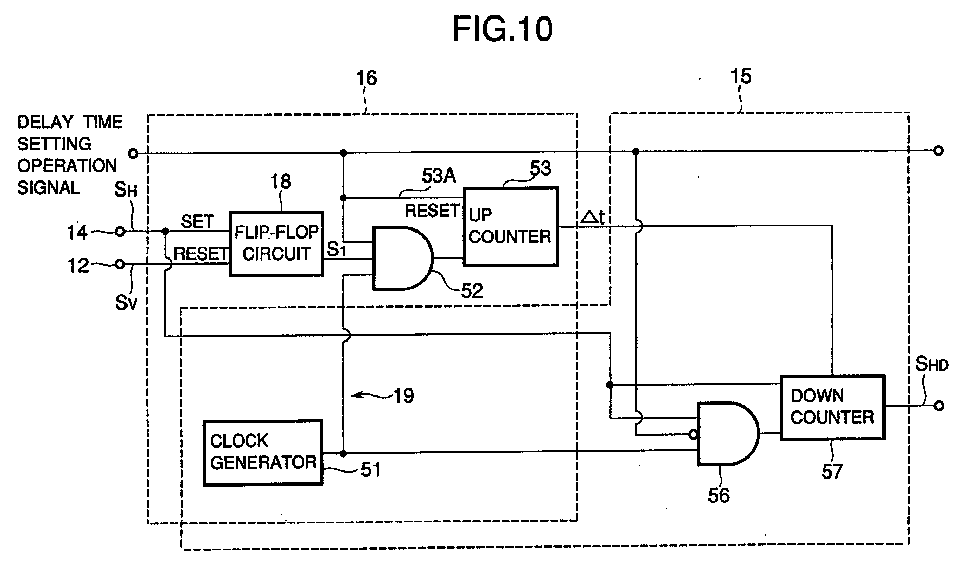

The time difference detecting circuit 16 performs the delay time setting operation which sets the time difference $\Delta t$ as delay time to the delay circuit 15 every time the stylus 1 is exchanged. As shown in Fig. 10, the time difference measuring circuit 16 is provided with a flip-flop circuit 18 which outputs output signals while the first detection signal $S_H$ is generated until the second detection signal $S_V$ is generated, and a time measuring circuit 19 which measures the time of outputting of the output signals in the flip-flop circuit 18 and operates the time difference $\Delta t$.

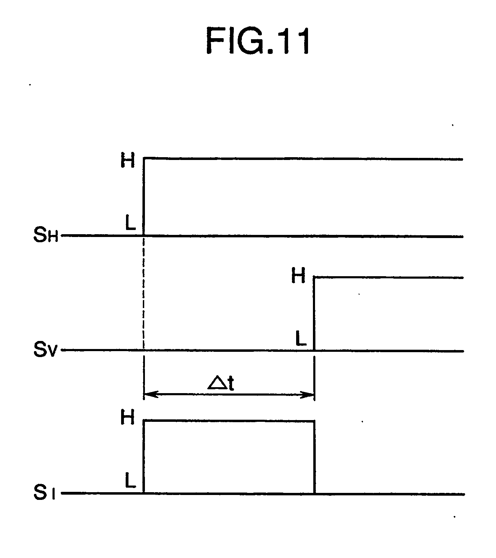

The flip-flop circuit 18 is a reset/set flip-flop (RS-FF) where a comparing circuit 14 with the first detection signal $S_H$ sent thereto is connected to a set terminal and a comparing circuit 12 with the second detection signal $S_V$ sent thereto is connected to a reset terminal, and the output signal $S_1$ becomes H level while the first detection signal $S_H$ becomes H level until the second detection signal $S_V$ becomes H level (refer to Fig. 11).

The time measuring circuit 19 comprises a clock generator 51, an AND circuit 52 which receives a signal of the clock generator 51, the output signal $S_1$ of the flip-flop circuit 18 and delay time setting operation signal, and outputs a signal, and an up counter 53 which receives a signal from the AND circuit 52 and operates the time difference $\Delta t$ from the time that the output signal $S_1$ is at the H level.

The up counter 53 is provided with a reset terminal 53A, which is connected to a control unit (not shown) of a coordinate measuring machine. When the delay time setting operation is to be performed, if the delay time setting operation signal is outputted, the up counter 53 is reset and $\Delta t$ is counted.

Also, the delay circuit 15 comprises an AND circuit 56 which receives a signal from the clock generator 51, the first detection signal $S_H$ and an inverted signal of the delay time setting operation signal, and outputs a signal, and a down counter 57 where the first detection signal $S_H$ is received and the time difference $\Delta t$ is loaded from the up counter 53 and a clock signal is inputted and the down count is started.

In the down counter 57, when the value becomes zero, borrow signal is outputted, and this signal is used as signal $s_{HD}$ that the first detection signal $S_H$ is delayed by the time difference $\Delta t$.

In this example, constitution of the delay circuit 15 and the time difference measuring circuit 16 is not limited to that as above described. For example, the clock generator 51 need not be made common with the delay circuit 15 and the time difference measuring circuit 16 but may be constituted separately.

Accordingly in this example, the touch detection circuit 6 is constituted by the time difference measuring circuit 16 measuring the time difference between the time of generating the first detection signal $S_H$ and the time of generating the second detection signal $S_V$ and the delay circuit 15 for delaying the first detection signal $S_H$ by the set delay time t when the disjunction of the first detection signal $S_H$ and the second detection signal $S_V$ is determined, and the time difference measuring circuit 16 performs the delay time setting operation of setting the time difference $\Delta t$ as the delay time to the delay circuit 15 every time the stylus 1 is exchanged. Before the measurement, the touching ball 1A of the installed stylus 1 touches the object to be measured at a prescribed angle, for example, 45 degrees and the time difference $\Delta t$ between the time of generating the first detection signal $S_H$ and the time of generating the second detection signal $S_V$ in this case is determined by the time difference measuring circuit, thereby even if shape of the installed stylus 1 is varied, since the time difference $\Delta t$ between the first detection signal $S_H$ and the second detection signal $S_V$ is corrected in each stylus 1, the measurement with high precision can be performed without the direction dependent property.

Further, since the delay time setting operation and the usual measuring operation are distinguished by the delay time setting operation signal, the wrong time difference t is not used. Therefore the high precision of the measurement is secured.

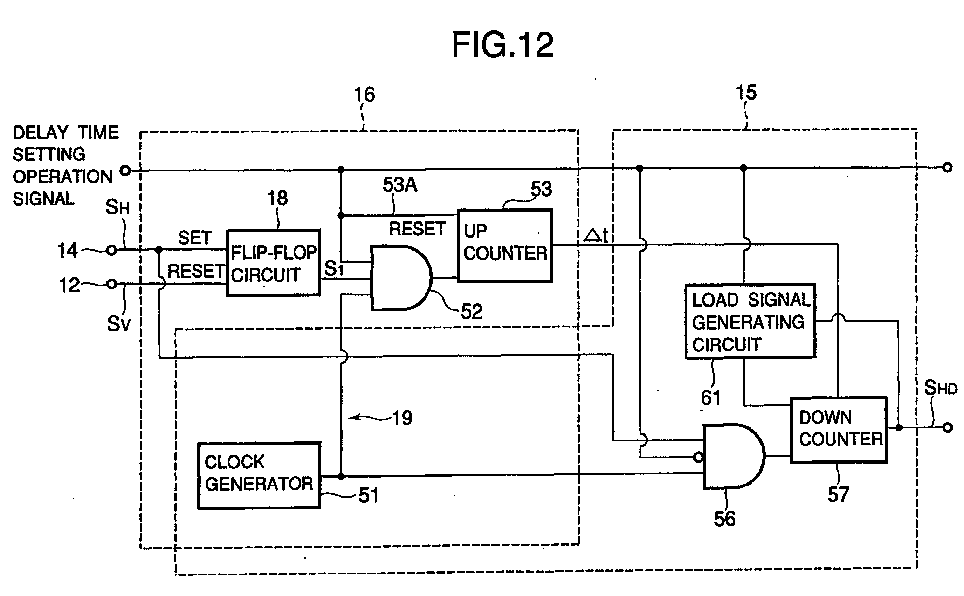

As shown in Fig. 12, a load signal generating circuit 61 may be included. The load signal generating circuit 61 generates a load signal to the down counter 57 after lapse of a prescribed time from outputting the signal $S_{HD}$ or after finishing the delay time setting operation.

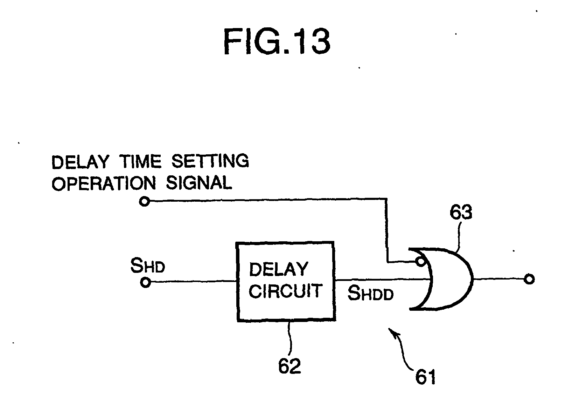

The load signal generating circuit 61 as shown in Fig. 13 comprises a delay circuit 62 generating a signal $S_{HDD}$ of the signal $S_{HD}$ delayed by a prescribed time and an OR circuit 63 generating the disjunction of the signal $S_{HDD}$ and the inverted signal of the delay time setting operation signal.

In the present invention, in order to increase the output from the piezoelectric elements 21 - 24, as shown in Fig. 14A, the center part of the piezoelectric element support part 1C is formed to be constricted, and in the piezoelectric elements 21 - 24, both end parts may be supported and fixed to both side parts of the piezoelectric element support part 1C and a gap may be formed between the center part and the piezoelectric element support part 1C. In this case, among the piezoelectric element support part 1C, cross-section of both side parts supporting the piezoelectric elements 21 - 24 is made square.

In this structure, since rigidity of the piezoelectric element support part 1C is lower than that of the piezoelectric element support part 1C in Fig. 1, the deformation amount of the piezoelectric elements 21 - 24 increases. Therefore the output of the piezoelectric elements 21 - 24 becomes large, and the measurement precision can be improved.

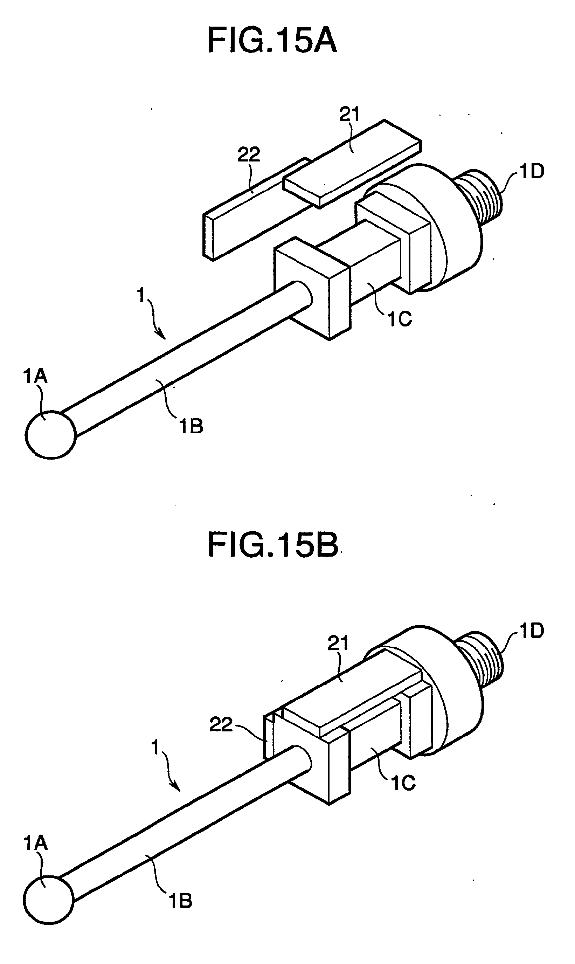

Further in the above-mentioned embodiments, although the description has been performed in the case that the four piezoelectric elements 21 - 24 are installed, in the following example as shown in Fig. 15A and 15B, two piezoelectric elements 21, 22 may be fixed to two adjacent side surfaces of the piezoelectric element support part 1C. In this case, in the touch signal producing circuit in Fig. 6, signals outputted from the piezoelectric elements 21, 22 need not be amplified differentially. But since the signal component includes not only the bending strain component but also the longitudinal structure component, the circuit may be said to be a simple circuit. Consequently when the direction orthogonal to the stylus axis touches the object to be measured, the direction dependent property is not generated in the $\Theta$ direction, but in other case, the direction dependent property remains in the $\beta$ direction. However, this is not disadvantageous in the simple measurement.

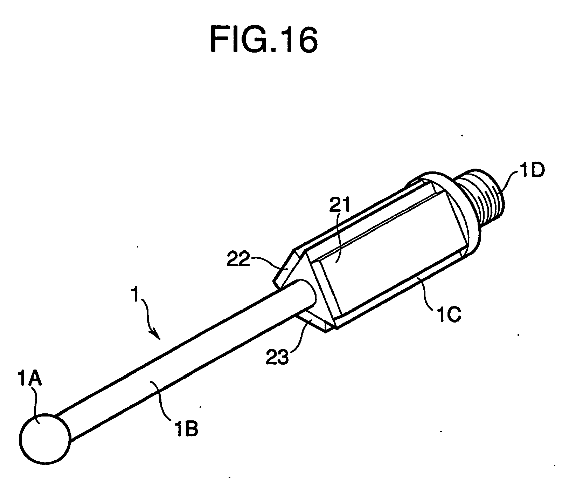

As shown in Fig. 16, the cross section of the piezoelectric element support part 1C may be made regular triangle and all three piezoelectric elements 21 ~ 23 may be mounted on each side surface of the piezoelectric element 1C. Further the cross-section of the piezoelectric element support part 1C may be made regular pentagon, regular hexagon or the like.

When the cross-section of the piezoelectric element support part 1C is made regular triangle, if outputs of the three piezoelectric elements 21 ~ 23 are squared and added, in the case that the touching ball touches the object to be measured from the direction orthogonal to the stylus axis, constant output not depending on the angle $\Theta$, namely bending strain component, can be obtained. If outputs of the three piezoelectric elements 21~23 are added, longitudinal strain component can be obtained. But in the case that the touching ball touches the object from the direction not orthogonal to the stylus axis, the direction dependent property remains in the $\beta$ direction. However, this is not disadvantageous in the simple measurement.

In the present invention as shown in Fig. 17, the center part of the piezoelectric element support part 1C is formed in circular cross-section. That is, in the present invention, in the piezoelectric element support part 1C, a part supporting directly the piezoelectric elements 21 ~ 24 is be provided with cross section of regular polygon.

CAPABILITY OF EXPLOITATION IN INDUSTRY

According to the present invention, since a touch signal probe is constituted in that a pole-shaped stylus having a touching part at a top end portion is provided with detecting elements arranged thereon for detecting that the touching part touches an object to be measured, the stylus has a detecting element support part for supporting and fixing the detecting elements, the detecting element support part is a regular polygonal body with cross-section orthogonal to the stylus axis being made regular polygon, detecting elements are mounted on at least two surfaces respectively among side surfaces of the regular polygonal body, sum, difference and square sum of signals outputted from these detecting elements are processed, and a touch detection signal is generated based on the results of the processing, thereby the measurement of high precision can be performed without the direction dependent property. Moreover since detecting elements are mounted on side surfaces of the polygonal body, structure of the touch signal probe can be made simple.

Also a touch signal probe according to the present invention, comprises a pole-shaped stylus with its end portion having a touching part touching an object to be measured, and a plurality of detecting elements arranged to the stylus for detecting that the touching part touches the object, wherein sum, difference and square sum of signals outputted from these detecting elements are operated, thereby a signal corresponding to the longitudinal vibration component along the axial direction of the stylus and a signal corresponding to the lateral vibration component along the orthogonal direction to the axial direction of the stylus are generated respectively, and a first detection signal is generated from the signal corresponding to the longitudinal vibration component and a second detection signal is generated from the signal corresponding to the lateral vibration component, and a touch detection signal is generated from the disjunction between the first detection signal and the second detection signal. The touch signal probe is provided with a time difference measuring circuit for measuring time difference between the time of generating the first detection signal and the time of generating the second detection signal, and a delay circuit for delaying the first detection signal by the delay time being set when the disjunction between the first detection signal and the second detection signal is determined, and since the time difference measuring circuit performs the delay time setting operation for setting the time difference as the delay time to the delay circuit every time the stylus is exchanged, when a touch detection signal generated by the disjunction from the first detection signal and the second detection signal, the first detection signal forming the maximal value early in the time is delayed by the prescribed time difference $\Delta$ t by the delay circuit thereby the same touch detection signal is generated irrespective of the touch position of the touching part. Moreover, even if shape of the installed stylus is varied, since the time difference t between the first detection signal and the second detection signal is corrected in every stylus, the measurement with high precision can be performed without the direction dependent property.

**Claims**

1.  A non-directional touch signal probe comprising:

    a pole-shaped stylus (1) with its top end portion having a touching part (1A) for touching an object to be measured;
    detecting elements (21-24) arranged to said stylus (1) for detecting that said touching part (1A) touches the object; and
    touch signal generation means adapted to process signals outputted from said detecting elements (21-24) and generate a touch detection signal based on results of processing;
    wherein said stylus (1) has a detecting element support part (1c) for supporting and fixing said detecting elements (21-24);
    **characterised in that** said detecting element support part (1 c) comprises a center part which has a circular cross-section and which is formed to be constricted between two side parts with a regular polygoncross-section orthogonal to the stylus axis, said detecting elements (21-24) being mounted on at least two surfaces among respective side surfaces of the regular polygonal side parts of the detecting element support part, both end parts of the detecting elements (21-24) being supported and fixed to both regular polygonal side parts of the detecting element support part, and a gap is formed between the center part of the detecting elements (21-24) and the center part of the detecting element support part (1c).

2.  A non-directional touch signal probe as set forth in claim 1, wherein said detecting elements (21-24) are piezoelectric elements.

3.  A non-directional touch signal probe as set forth in claim 2, wherein said detecting elements (21-2A) are strain gauges.

4.  A non-directional touch signal probe as set forth in claim 2, wherein said processing is any of sum, subtraction, square, constant multiplication and delay or combination thereof.

5.  A non- directional touch signal probe as set forth in claim 1,wherein cross-section of said side parts of said detecting element support part (1c) is made square and the detecting elements (21-24) of four in the total number are mounted on each side surface of the detecting element support part (1c), and the touch signal generation means is further adapted to generate the touch detection signal from two difference signals outputted from two sets of detecting elements (21 and 23, 22 and 29) positioned in relation of the front and rear sides to each other with respect to said detecting element support part (16) among these four detecting elements and from sum signals outputted from all four detecting elements or sum signals from the two detecting elements positioned in relation of the front and rear sides to each other.

6.  A non-directional touch signal probe as set forth in claim 5, wherein the touch signal generation means is further adapted to produce a first touch signal from the two difference signals outputted from the two sets of detecting elements (21 and 22, 22 and 24) positioned in relation of the front and rear sides to each other, and a second touch signal from sum signals outputted from the four detecting elements or from sum signals outputted from the two detecting elements positioned in relation of the front and rear sides to each other, and to delay the second touch signal by a prescribed time and then generate the touch detection signal from the disjunction of the first touch signal and the delayed second touch signal.

7.  A non-directional touch signal probe as set forth in claim 6, wherein the touch signal generation means is further adapted to produce a first detection signal when two difference signals outputted from two sets of detection elements positioned in relation of the front and rear sides are squared and summed respectively and the square sum signal exceeds a prescribed reference value, and to produce a second detection signal when sum signal outputted from the four detection elements or sum signal outputted from two detection elements positioned in relation of the front and rear sides exceeds a prescribed reference value.

8. A non-directional touch signal probe as set forth in claim 5, wherein the touch signal generation means is further adapted to obtain one signal by adjusting in amount and delaying by a prescribed time sum signals outputted from each of the detection elements or sum signals outputted from the two detection elements positioned in relation of the front and rear sides are adjusted in amount and delayed by a prescribed time, to output two difference signals from the detection elements positioned in relation of the front and rear sides, and
to square and sum said one signal and said two difference signals, thus three signals in total, and to generate the touch detection signal using signals produced from said three signals.

9. A non-directional touch signal probe as set forth in claim 1, wherein said detecting elements (21-24) are in planar rectangular form with its longitudinal direction in parallel to the stylus axis.

10. A non-directional touch signal probe as set forth in claim 1, wherein cross-section of said side parts of the detecting element support part (1c) is made square and two detecting elements (21,22) are fixed to two side surfaces adjacent to each other of the detecting element support part (1c).

## Patentansprüche

1. Ungerichtete Berührungssignal-Sonde, die Folgendes umfasst:

einen stabförmigen Stift (1), wobei dessen oberer Endabschnitt einen Berührungsteil (1A) für das Berühren eines zu messenden Gegenstandes hat,
Sensorelemente (21-24), die an dem Stift (1) angeordnet sind, um zu erkennen, dass der Berührungsteil (1A) den Gegenstand berührt, und
Berührungssignal-Erzeugungsmittel, die dafür eingerichtet sind, von den Sensorelementen (21-24) ausgegebenen Signale zu verarbeiten und auf der Grundlage der Ergebnisse der Verarbeitung ein Berührungserkennungssignal zu erzeugen,
wobei der Stift (1) einen Sensorelement-Stützteil (1c) für das Stützen und Befestigen der Sensorelemente (21-24) hat,
**dadurch gekennzeichnet, dass** der Sensorelement-Stützteil (1c) einen mittleren Teil umfasst, der einen kreisförmigen Querschnitt hat und der dafür geformt ist, zwischen zwei seitlichen Teilen mit einem regelmäßigen vieleckigen Querschnitt, senkrecht zu der Stiftachse, eingespannt zu sein, wobei die Sensorelemente (21-24) an wenigstens zwei Flächen unter den jeweiligen seitlichen Flächen der regelmäßigen vieleckigen seitlichen Teile des Sensorelement-Stützteils angebracht sind, wobei die beiden Endteile der Sensorelemente (21-24) an den beiden regelmäßigen vieleckigen seitlichen Teilen des Sensorelement-Stützteils gestützt und befestigt werden und ein Spalt zwischen dem mittleren Teil der Sensorelemente (21-24) und dem mittleren Teil des Sensorelement-Stützteils (1 c) gebildet wird.

2. Ungerichtete Berührungssignal-Sonde nach Anspruch 1, wobei die Sensorelemente (21-24) piezoelektrische Elemente sind.

3. Ungerichtete Berührungssignal-Sonde nach Anspruch 2, wobei die Sensorelemente (21-24) Dehnungsmessgeräte sind.

4. Ungerichtete Berührungssignal-Sonde nach Anspruch 2, wobei die Verarbeitung eine beliebige von Summierung, Subtraktion, Quadrieren, Festwert-Multiplikation und Verzögerung oder eine Kombination derselben ist.

5. Ungerichtete Berührungssignal-Sonde nach Anspruch 1, wobei der Querschnitt der seitlichen Teile des Sensorelement-Stützteils (1c) quadratisch gemacht ist und die insgesamt vier Sensorelemente (21-24) an jeder seitliche Fläche des Sensorelement-Stützteils (1c) angebracht sind und die Berührungssignal-Erzeugungsmittel ferner dafür eingerichtet sind, das Berührungserkennungssignal aus zwei Differenzsignalen, die von zwei Sätzen von Sensorelementen (21 und 23, 22 und 29) ausgegeben werden, die unter diesen vier Sensorelementen, im Verhältnis der vorderen und der hinteren Seite zueinander in Bezug auf den Sensorelement-Stützteil (16) angeordnet sind und aus Summensignalen, die von allen vier Sensorelementen ausgegeben werden, oder Summensignalen von den zwei Sensorelementen, die im Verhältnis der vorderen und der hinteren Seite zueinander angeordnet sind, zu erzeugen.

**6.** Ungerichtete Berührungssignal-Sonde nach Anspruch 5, wobei die Berührungssignal-Erzeugungsmittel ferner dafür eingerichtet sind, ein erstes Berührungssignal aus den zwei Differenzsignalen, die von den zwei Sätzen von Sensorelementen (21 und 22, 22 und 24) ausgegeben werden, die im Verhältnis der vorderen und der hinteren Seite zueinander angeordnet sind, und ein zweites Berührungssignal aus Summensignalen, die von den vier Sensorelementen ausgegeben werden, oder aus Summensignalen, die von den zwei Sensorelementen, die im Verhältnis der vorderen und der hinteren Seite zueinander angeordnet sind, ausgegeben werden, zu erzeugen, und

das zweite Berührungssignal um eine vorgeschriebene Zeit zu verzögern und danach das Berührungserkennungssignal aus der Disjunktion des ersten Berührungssignals und des verzögerten zweiten Berührungssignals zu erzeugen.

**7.** Ungerichtete Berührungssignal-Sonde nach Anspruch 6, wobei die Berührungssignal-Erzeugungsmittel ferner dafür eingerichtet sind, ein erstes Erkennungssignal zu erzeugen, wenn zwei Differenzsignale, die von zwei Sätzen von Sensorelementen ausgegeben werden, die im Verhältnis der vorderen und der hinteren Seite angeordnet sind, jeweils quadriert und summiert werden und das Quadratsummensignal einen vorgeschriebenen Bezugswert überschreitet, und ein zweites Erkennungssignal zu erzeugen, wenn ein Summensignal, das von den vier Sensorelementen ausgegeben wird, oder ein Summensignal, das von zwei Sensorelementen, die im Verhältnis der vorderen und der hinteren Seite angeordnet sind, ausgegeben wird, einen vorgeschriebenen Bezugswert überschreitet.

**8.** Ungerichtete Berührungssignal-Sonde nach Anspruch 5, wobei die Berührungssignal-Erzeugungsmittel ferner dafür eingerichtet sind, ein Signal zu erlangen durch das Einstellen im Betrag und das Verzögern um eine vorgeschriebene Zeit von Summensignalen, die von jedem der Sensorelemente ausgegeben werden, oder Summensignale, die von den zwei Sensorelementen, die im Verhältnis der vorderen und der hinteren Seite angeordnet sind, ausgegeben werden, im Betrag eingestellt und um eine vorgeschriebene Zeit verzögert werden, um zwei Differenzsignale von den Sensorelementen, die im Verhältnis der vorderen und der hinteren Seite angeordnet sind, auszugeben, und das eine Signal und die zwei Differenzsignale, folglich drei Signale insgesamt, zu quadrieren und zu summieren und das Berührungserkennungssignal unter Verwendung von Signalen zu erzeugen, die aus den drei Signalen erzeugt werden.

**9.** Ungerichtete Berührungssignal-Sonde nach Anspruch 1, wobei sich die Sensorelemente (21-24) in einer ebenen rechteckigen Form befinden, wobei ihre Längsrichtung parallel zu der Stiftachse ist.

**10.** Ungerichtete Berührungssignal-Sonde nach Anspruch 1, wobei der Querschnitt der seitlichen Teile des Sensorelement-Stützteils (1c) quadratisch gemacht ist und zwei Sensorelemente (21, 22) an zwei aneinander angrenzenden seitlichen Flächen des Sensorelement-Stützteils (1c) befestigt sind.

**Revendications**

**1.** Sonde de signal tactile omnidirectionnelle comprenant :

un palpeur (1) en forme de poteau avec sa portion d'extrémité supérieure comportant une partie de contact (1A) permettant de toucher un objet devant être mesuré ;
des éléments de détection (21 à 24) agencés sur ledit palpeur (1) permettant de détecter que ladite partie de contact (1A) touche l'objet ; et
un moyen de génération de signal tactile adapté pour traiter des signaux fournis en sortie par lesdits éléments de détection (21 à 24) et générer un signal de détection tactile d'après les résultats du traitement ;
ledit palpeur (1) comportant une partie de support d'élément de détection (1c) permettant de supporter et fixer lesdits éléments de détection (21 à 24) ;
**caractérisé en ce que** ladite partie de support d'élément de détection (1c) comprend une partie centrale qui a une section transversale circulaire et qui est formée pour être contrainte entre deux parties latérales avec une coupe transversale polygonale régulière orthogonale à l'axe du palpeur, lesdits éléments de détection (21 à 24) étant montés sur au moins deux surfaces parmi les surfaces latérales respectives des parties latérales polygonales régulières de la partie de support d'élément de détection, les deux parties d'extrémité des éléments de détection (21 à 24) étant supportées et fixées aux deux parties latérales polygonales régulières de la partie de support d'élément de détection, et un écartement est formé entre la partie centrale des éléments de détection (21 à 24) et la partie centrale de la partie de support d'élément de détection (1 c).

2. Sonde de signal tactile omnidirectionnelle selon la revendication 1, dans laquelle lesdits éléments de détection (21 à 24) sont des éléments piézoélectriques.

3. Sonde de signal tactile omnidirectionnelle selon la revendication 2, dans laquelle lesdits éléments de détection (21 à 24) sont des extensomètres.

4. Sonde de signal tactile omnidirectionnelle selon la revendication 2, dans laquelle ledit traitement est l'un quelconque d'une somme, d'une soustraction, d'un carré, d'une multiplication constante et d'un retard ou d'une de leurs combinaisons.

5. Sonde de signal tactile omnidirectionnelle selon la revendication 1, dans laquelle la coupe transversale desdites parties latérales de ladite partie de support d'élément de détection (1c) est de forme carrée et les éléments de détection (21 à 24) au nombre de quatre au total sont montés sur chaque surface latérale de la partie de support d'élément de détection (1 c), et le moyen de génération de signal tactile est en outre adapté pour générer le signal de détection tactile à partir de deux signaux de différence fournis en sortie par deux jeux d'éléments de détection (21 et 23, 22 et 29) positionnés relativement aux côtés avant et arrière l'un de l'autre par rapport à ladite partie de support d'élément de détection (16) parmi ces quatre éléments de détection et à partir de signaux de somme fournis en sortie par les quatre éléments de détection ou de signaux de somme depuis les deux éléments de détection positionnés relativement aux côtés avant et arrière l'un de l'autre.

6. Sonde de signal tactile omnidirectionnelle selon la revendication 5, dans laquelle le moyen de génération de signal tactile est en outre adapté pour produire un premier signal tactile à partir des deux signaux de différence fournis en sortie par les deux jeux d'éléments de détection (21 et 22, 22 et 24) positionnés relativement aux côtés avant et arrière l'un de l'autre et un second signal tactile à partir de signaux de somme fournis en sortie par les quatre éléments de détection ou à partir de signaux de somme fournis en sortie par les deux éléments de détection positionnés relativement aux côtés avant et arrière l'un de l'autre, et
pour retarder le second signal tactile d'un délai prescrit et ensuite générer le signal de détection tactile à partir de la disjonction du premier signal tactile et du second signal tactile retardé.

7. Sonde de signal tactile omnidirectionnelle selon la revendication 6, dans laquelle le moyen de génération de signal tactile est en outre adapté pour produire un premier signal de détection lorsque deux signaux de différence fournis en sortie par deux jeux d'éléments de détection positionnés relativement aux côtés avant et arrière sont au carré et additionnés respectivement et le signal de somme au carré excède une valeur de référence prescrite, et pour produire un second signal de détection lorsqu'un signal de somme fourni en sortie par les quatre éléments de détection ou un signal de somme fourni en sortie par deux éléments de détection positionnés relativement aux côtés avant et arrière excède une valeur de référence prescrite.

8. Sonde de signal tactile omnidirectionnelle selon la revendication 5, dans laquelle le moyen de génération de signal tactile est en outre adapté pour obtenir un signal en ajustant en quantité et en retardant d'un délai prescrit des signaux de somme fournis en sortie par chacun des éléments de détection ou des signaux de somme fournis en sortie par les deux éléments de détection positionnés relativement aux côtés avant et arrière sont ajustés en quantité et retardés d'un délai prescrit, pour fournir en sortie deux signaux de différence depuis les éléments de détection positionnés relativement aux côtés avant et arrière, et
pour élever au carré et additionner ledit un signal et lesdits deux signaux de différence, par conséquent trois signaux au total, et pour générer le signal de détection tactile à l'aide des signaux produits par lesdits trois signaux.

9. Sonde de signal tactile omnidirectionnelle selon la revendication 1, dans laquelle lesdits éléments de détection (21 à 24) sont en forme rectangulaire plane avec sa direction longitudinale en parallèle avec l'axe du palpeur.

10. Sonde de signal tactile omnidirectionnelle selon la revendication 1, dans laquelle la coupe transversale desdites parties latérales de la partie de support d'élément de détection (1c) est de forme carrée et deux éléments de détection (21, 22) sont fixés à deux surfaces latérales adjacentes l'une à l'autre de la partie de support d'élément de détection (1 c).

# FIG.1A

# FIG.1B

# FIG.2A

# FIG.2B

16

# FIG.3

# FIG.4

# FIG.5

PIEZOELECTRIC ELEMENT 21 — $V_1$

PIEZOELECTRIC ELEMENT 22 — $V_2$

PIEZOELECTRIC ELEMENT 23 — $V_3$

PIEZOELECTRIC ELEMENT 24 — $V_4$

DIFFERENTIAL AMPLIFYING CIRCUIT 41 — $V_{13}$

DIFFERENTIAL AMPLIFYING CIRCUIT 42 — $V_{24}$

ADDING CIRCVIT 5 — $V_{1234}$

TOUCH SIGNAL DETECTING CIRCUIT 6 — TOUCH DETECTION SIGNAL

EP 0 897 100 B1

# FIG.6

$$V_{1234} = K(V_1+V_2+V_3+V_4)$$

TOUCH DETECTION SIGNAL

EP 0 897 100 B1

# FIG.7

# FIG.8

$$V_{1234} = K(V_1 + V_2 + V_3 + V_4)$$

EP 0 897 100 B1

# FIG.9

EP 0 897 100 B1

# FIG.10

EP 0 897 100 B1

# FIG.11

# FIG.12

DELAY TIME
SETTING
OPERATION
SIGNAL

S$_H$

14

12

S$_V$

16

15

18

FLIP-FLOP
CIRCUIT

SET

RESET

S$_1$

53A

RESET

UP
COUNTER

53

$\triangle$t

52

19

CLOCK
GENERATOR

51

LOAD SIGNAL
GENERATING
CIRCUIT

61

56

DOWN
COUNTER

57

S$_{HD}$

EP 0 897 100 B1

# FIG.13

DELAY TIME SETTING
OPERATION SIGNAL

$S_{HD}$

DELAY
CIRCUIT

$S_{HDD}$

63

61

62

# FIG.14A

# FIG.14B

# FIG.15A

# FIG.15B

# FIG.16

# FIG.17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60048681 A
- US P4177568 A
- JP 54078164 A
- GB 2006435 B
- JP 8327308 A
- DE 3933575 A
- EP 0427177 A
- JP 6221806 A